# EUROPÄISCHE PATENTSCHRIFT

(11) **EP 1 094 962 B1**
(45) Veröffentlichungstag und Bekanntmachung des Hinweises auf die Patenterteilung: **20.09.2006**
(21) Anmeldenummer: 99944259.3
(22) Anmeldetag: 28.06.1999
(51) Int. Cl.: B61L 27/00

(54) **OPTIMIERTES KOMMUNIKATIONSVERFAHREN FÜR FUNKGESTÜTZTE VERKEHRSDIENSTE**
OPTIMIZED COMMUNICATION METHOD FOR RADIO-ASSISTED TRAFFIC SERVICES
PROCEDE DE COMMUNICATION OPTIMISE POUR SERVICES DE REGULATION DE LA CIRCULATION AVEC APPUI RADIO

(30) Priorität: 09.07.1998 DE 19832594
(43) Veröffentlichungstag der Anmeldung: 02.05.2001
(73) Patentinhaber: SIEMENS AKTIENGESELLSCHAFT, 80333 München (DE)
(72) Erfinder: WOYWOD, Tanja, D-12209 Berlin (DE); HOFMANN, Thomas, D-12623 Berlin (DE); THOM, Marc, D-12681 Berlin (DE); STEIN, Fabrice, D-12621 Berlin (DE); PLIQUETT, Volker, D-12621 Berlin (DE); KENDELBACHER, Detlef, D-13129 Berlin (DE)
(86) Internationale Anmeldenummer: PCT/DE1999/002026
(87) Internationale Veröffentlichungsnummer: WO 2000/002758

(56) Entgegenhaltungen:
- EP-A- 0 710 043
- DE-A- 19 721 246
- US-A- 4 748 655

## Beschreibung

Die Erfindung betrifft ein optimiertes Kommunikationsverfahren für funkgestützte Verkehrsdienste und ist anwendbar beispielsweise für Bahndienste.

Für die Steuerung des Bahnbetriebes kommt gemäß dem Stand der Technik eine punkt- oder linienförmige Zugbeeinflussung zur Anwendung. Bei der punktförmigen Zugbeeinflussung werden an ortsfesten Beeinflussungseinrichtungen bestimmte in ihrer Menge begrenzte Informationen an die vorüberlaufenden Fahrzeuge übermittelt, die dort ausgewertet und ggf. weiterverarbeitet werden. Bei linienförmigen Zugbeeinflussungen ist eine quasi ständige Informationsübermittlung von der Strecke an die Fahrzeuge und ggf. auch in Gegenrichtung möglich, bei der sehr viel mehr Informationen zur Fahrzeugsteuerung und Fahrzeugüberwachung ausgetauscht werden können. üblicherweise erfolgt die Informationsübertragung mittels im Gleis verlegter Linienleiter, an die mindestens einzelne Fahrzeuge der die Strecke passierenden Züge induktiv angekoppelt sind. Der Aufwand für die Installation, den Betrieb und die Wartung der im Gleis verlegten Linienleiter ist beträchtlich. Aus diesem Grunde ist auch bereits vorgeschlagen worden, die Daten zwischen den einzelnen Instanzen per Funk zu übertragen. Hierfür kann ein Mobilfunksystem zur Anwendung kommen, wie es bereits für die Sprach- und Datenübermittlung verwendet wird und beispielsweise in der EP 0 726 689 A2 und der US 4,748,655 beschrieben ist. Aus der US 4,748,655 ist ein Mobilfunknetz bekannt, bei dem eine Kommunikation zwischen mobilen Instanzen, beispielsweise auf Zügen, und ortsfesten Instanzen über eine Vermittlungsstelle (MSC) stattfindet. Dabei treten ortfeste, tragbare oder auf Fahrzeugen angeordnete Gateways an die Stelle von Mobilfunkgeräten eines konventionellen GSM-Netzes. An die Gateways angeschlossene mobile Funkgeräte können daher mit kleinerer Leistung betrieben werden. Adressierungsinformationen mobiler Funkgeräte, die mit einem Gateway Verbindung aufnehmen, werden in den zugehörigen Gateways gespeichert und über eine ortsfeste Verbindung oder über eine Funkschnittstelle an die Vermittlungsstelle übermittelt. Somit können ortsfeste Instanzen über die in der Vermittlungsstelle und in den Gateways gespeicherten Informationen jederzeit ein mobiles Funkgerät im Bereich eines der Gateways erreichen.

Die zur Steuerung von Bahnfahrzeugen zu übermittelnden Daten sind im Gegensatz zu den Sprechfunkdaten sicherheitsrelevant, weil sie direkt in die Fahrzeugsteuerung einfließen. Es ist daher auf geeignete Weise dafür Sorge zu tragen, daß die Daten auf ihrem Wege von der Datenquelle zur Datensenke nicht verfälscht werden oder verloren gehen können. Für die Sicherung solcher Daten werden heute vielfach kryptologische Verfahren angewendet.

Eine Besonderheit des Bahnbetriebes ist es, dass die auf die Züge zu übermittelnden Daten dezentral von einzelnen Stellwerken oder Leitstellen bereitgestellt werden. Solange die Datenübertragung über Linienleiter erfolgte, war ein Zug stets mit einer einzigen Leitstelle verbunden und wechselte beim Einfahren in einen folgenden Streckenbereich automatisch zu der dafür zuständigen Leitstelle. Bei der Funkzugbeeinflussung, beispielsweise über ein aus der oben erläuterten US 4,748,655 bekanntes Mobilfunknetz, ist diese durch die örtlichen Gegebenheiten der Gleisanlage bedingte automatische Zuordnung zur jeweils zuständigen Leitstelle nicht mehr gegeben. Vielmehr muss das Fahrzeug oder die jeweils befahrene Steuerstelle aufgrund des jeweils bekannten Fahrortes des Fahrzeuges auf der Strecke entweder die folgende Steuerzentrale dazu auffordern, Verbindung mit dem sich ihrem Streckenbereich nähernden Zug aufzunehmen oder aber das Fahrzeug dazu veranlassen, diese Verbindung aufzunehmen. Dazu wird jeweils eine bestimmte Zeitspanne in der Größenordnung von bis zu 10s benötigt. In dieser Zeit hat das Triebfahrzeug eines Zuges noch Verbindung mit der Steuerzentrale des von ihm befahrene Streckenbereiches und es ist damit beschäftigt, mit der Steuerzentrale des folgenden Bereiches in Verbindung zu treten. Auf dem Fahrzeug werden hierfür zwingend mindestens zwei Funkgeräte benötigt.

Ein sehr großes Problem hinsichtlich der Datenübertragung in dezentralen Anlagen, wie Bahnanlagen, stellen auch die zentralen Dienste z.B. für Disposition und zentrale Diagnose dar. Entweder werden für diese zentralen Dienste gesonderte Funkkanäle zur Verfügung gestellt, was wegen der begrenzten Ressourcen aber kaum möglich ist, oder aber diese zentralen Dienste kommunizieren mit den Zügen über die Kommunikationsbausteine der dezentralen Steuerungen. Dann aber muss die Verbindung zwischen den zentralen Diensten und den Zügen ständig auf die aktuellen Fahrorte der Züge nachgeführt werden, d. h. die Daten der zentralen Dienste müssen fortlaufend auf die Kommunikationsbausteine der benachbarten Steuerstellen geschaltet werden. Hierdurch entstehende Lücken in der Übermittlung der Daten, insbesondere durch Synchronisationsvorgänge, in der Größenordnung einiger Sekunden. Außerdem ist bei dieser Konstellation von Nachteil, dass zentrale Dienste, die eine Anforderung an ein Fahrzug stellen, zunächst einmal feststellen müssen, welche Steuerstelle derzeit Verbindung hat mit dem betreffenden Fahrzeug.

Bei einer zentralen Kommunikationseinrichtung gemäß der DE 197 21 246 werden diese Nachteile vermieden, indem ein zusatzlicher zentraler Gatewayrechner eingeführt wird, der eine kontinuierliche Verbindung zu den dem Gatewayrechner fest zugeordneten Zügen ermöglicht. Der Wechsel der Verbindung zu den dezentralen Instanzen erfolgt dabei nur auf der Festseite zwischen Gatewayrechner und dezentraler Instanz. Die Erreichbarkeit von mobilen und festen Instanzen ist in diesem Fall durch eine feste Beziehung zwischen mobiler Instanz und Gatewayrechner gegeben.

Die Nachteile dieser Lösung bestehen in langen Kommunikationswegen zwischen mobilen und festen Instanzen durch die Einführung eines ortsfesten zentralen Gatewayrechners, über welchen die Kommunikation zum mobilen Instanzen unabhängig von seinem Aufenthaltsort verläuft. Weiterhin ist die Einrichtung und Pflege der Beziehungen zwischen den mobilen Instanzen und ihren zugeordneten Gatewayrechnern im Fahrzeug und im ortsfesten Gatewayrechner notwendig.
Zusammengefasst bestehen die Probleme beim bekannten Stand der Technik darin, dass bei Realisierungen gemäß dem dezentralen Lösungsansatz zentrale Instanzen das Problem haben, diejenigen dezentralen Instanzen zu ermitteln, die eine Verbindung zum Zug haben, um sich auf diese Verbindung aufzuschalten. Unbekannte mobile Instanzen können mit diesem Verfahren nicht erreicht werden, da keine Informationen über deren Aufenthaltsort in den ortsfesten Instanzen vorliegen. Beim Wechsel der zuständigen dezentralen Instanz wird eine neue Verbindung zur nächsten dezentralen Instanz hergestellt. Dafür wird ein zweites Mobilfunkgerät benötigt. Alle Verbindungen der zentralen Instanzen müssen ebenfalls auf die neue Funkverbindung überwechseln (hopping).

Bei Realisierungen gemäß dem zentralen Lösungsansatz hat jeder Zug einen festen Stellvertreter in einem streckenseitigen Gatewayrechner (feste Beziehung zwischen mobiler Instanz und Gatewayrechner). Dadurch müssen Rufe und Daten immer über einen ortsfesten Knoten geführt werden, unabhängig davon, wo der Zug sich befindet. Die entstehenden Kommunikationswege sind demzufolge lang, woraus hohe Betriebskosten resultieren. Außerdem müssen die Stellvertreterbeziehungen zu den mobilen Instanzen in jedem Gatewayrechner und jeder mobilen Instanz individuell konfiguriert und gepflegt werden, was zu hohen Projektierungs- und Wartungskosten führt.

Der Erfindung liegt die Aufgabe zugrunde, ein optimiertes Kommunikationsverfahren für funkgestützte Verkehrsdienste zu schaffen, welches mit einfachen Mitteln einen zuverlässigen Datenverkehr über effektive Kommunikationswege mit nur einem Funkübertragungskanal zwischen den mobilen Instanzen und den ortsfesten Instanzen ermöglicht und den Aufwand für die Systemeinrichtung, Systemaktualisierung und Systemwartung minimiert.
Diese Aufgabe wird erfindungsgemäß gelöst durch die Merkmale im kennzeichnenden Teil des Anspruches 1 in Verbindung mit den Merkmalen im Oberbegriff. Zweckmäßige Ausgestaltungen der Erfindung sind in den Unteransprüchen enthalten.

Ein besonderer Vorteil der Erfindung besteht darin, dass neben den ortsfesten zentralen Diensten und den ortsfesten dezentralen Steuerstellen in das Verkehrsetzwerk mehrere dezentrale ortfeste Gatewayrechner eingeführt werden, wobei die Kommunikation zwischen den mobilen und den ortsfesten Instanzen über die Gatewayrechner realisiert wird, derart, dass für die mobilen Instanzen (Züge A bis D), die mit den Gatewayrechnern (Gateway 1 bis Gateway n) kommunizieren, im Gatewayrechner (Gateway 1 bis Gateway n) und in den ortsfesten Instanzen (RBC1 bis RBCm, ZD1 bis ZDx) je eine Stellvertreterinstanz und für die ortsfesten Instanzen (RBC1 bis RBCm, ZD1 bis ZDx), die mit den Gatewaytechnern (Gateway 1 bis Gateway n) kommunizieren, im Gatewayrechner (Gateway 1 bis Gateway n) Stellvertreterinstanzen eingerichtet werden, wobei für mehrere ortsfeste Instanzen (RBC1 bis RBCm, ZD1 bis ZDx) in einem Gatewayrechner (Gateway 1 oder ... oder Gateway n) Stellvertreterinstanzen eingerichtet werden können und
über ein Updateverfahren zwischen den Stellvertreterinstanzen im Gatewayrechner (Gateway 1 bis Gateway n) und den ortsfesten Instanzen (RBC1 bis RBCm, ZD1 bis ZDx) die Stellvertreterinformation im Gatewayrechner (Gateway 1 5 bis Gateway n) und in den ortsfesten Instanzen (RBC1 bis RBCm, ZD1 bis ZDx) aktualisiert werden, so dass die ortsfesten Instanzen (RBC1 bis RBCm, ZD1 bis ZDx) jederzeit Kenntnis darüber erhalten, welche Gatewayrechner (Gateway 1 bis Gateway n) mit welchen mobilen Instanzen (Züge A bis D) kommunizieren, wobei nur diejenigen ortsfesten Instanzen (RBC1 bis RBCm, ZD1 bis ZDx) informiert werden, die auch im Gatewayrechner (Gateway 1 bis Gateway n) registriert sind, wodurch sie in die Lage versetzt werden, sich über den jeweiligen Gatewayrechner (Gateway 1 bis Gateway n) auf die bestehende Verbindung zu der jeweiligen mobilen Instanz (Züge A bis D) aufzuschalten und diese Verbindung mit zu benutzen.

Die Gatewayrechner können beispielsweise in der Nähe von Vermittlungsknoten angeordnet sein, um Leitungswege einzusparen.

Über die Gatewayrechner wird die Kommunikation zwischen mobilen und ortsfesten Instanzen gesteuert. Die Initiative zur Kommunikation kann dabei von mobiler Seite, von zentralen Diensten oder dezentralen Steuerstellen aus unabhängig erfolgen.

Zusätzlich zu den dezentralen Gatewayrechnern können bei Bedarf Informationsserver im Verkehrsnetz eingerichtet werden, die ebenfalls als ortsfeste Instanzen mit Gatewayrechnern, zentralen Diensten und dezentralen Steuerstellen kommunizieren können.

Um mit nur einem Funkkanal alle Verbindungen zwischen einer mobilen Instanz und verschiedenen ortsfesten Instanzen zu bedienen, wird sowohl von mobiler, als auch von ortsfester Seite ein gemeinsamer Gatewayrechner für die Kommunikation temporär und unabhängig voneinander ausgewählt.

Durch die Einrichtung von Stellvertreterinstanzen mobiler und ortsfester Instanzen im Gatewayrechner und deren Aktualisierung kann jederzeit eine gegenseitige Erreichbarkeit der Instanzen über einen gemeinsamen Gatewayrechner sichergestellt Werden. Mobile Instanzen können alle im Gatewayrechner als Stellvertreterinstanzen abgebildeten ortsfesten Instanzen über einen Funkkanal erreichen. Ortsfeste Instanzen können unabhängig voneinander über das Stellvertreterabbild den korrekten Gatewayrechner auswählen, welcher Stellvertreterinstanz des Verkehrsmittels, beispielsweise des Zuges, ist und damit einen gemeinsamen Funkkanal zur mobilen Instanz nutzen.

Ein weiterer wesentlicher Vorteil besteht darin, daß ortsfeste Instanzen zum Zeitpunkt des Kommunikationsbedarfs zu mobilen Instanzen nicht mit der Suche eines Gatewayrechners beginnen müssen, über den die mobile Instanz ggf. augenblicklich kommuniziert (kein Pollen der Gatewayrechner nötig). Weil die Informationen über die Kommunikation zwischen Gatewayrechner und mobilen Instanzen vorliegen, kann die ortsfeste Instanz sofort den korrekten Gatewayrechner für die Aufschaltung auf die bestehende Funkverbindung zur mobilen Instanz auswählen.

Weiterhin kann durch die ortsfeste Instanz sofort entschieden werden, ob die gewünschte mobile Instanz augenblicklich überhaupt mit einem Gatewayrechner kommuniziert. Ist das nicht der Fall, kann ein beliebiger Gatewayrechner für die Kommunikation (ggf. nach Kriterien einer optimalen Länge des Kommunikationsweges) ausgewählt werden.

Ein weiterer Vorteil besteht darin, dass mit Hilfe des beschriebenen Kommunikationsverfahrens auch mobile Instanzen erreicht werden können, die den ortsfesten Instanzen unbekannt sind (dynamisches Telefonbuch).

Das Updateverfahren optimiert die Informationsübertragung dadurch, dass nur diejenigen ortsfesten Instanzen informiert werden, die auch im Gatewayrechner registriert sind und eine Stellvertreterinstanz besitzen. Des Weiteren werden zwischen Gatewayrechner und den registrierten ortsfesten Instanzen nur Anderungsnachrichten übertragen, so dass auch dadurch der Införmationsaustausch optimiert wird. Die Updateinformationen konnen ggf. vorverarbeitet und entkoppelt vom Zeitpunkt ihrer Entstehung zu den Instanzen übertragen werden, wodurch sich Netzlasten besser verteilen.

In den dezentralen Gatewayrechnern und den mobilen Instanzen müssen für die Realisierung keine Daten vorgehalten werden, die eine Zuordnung von Gatewayrechnern zu Instanzen beschreiben (keine Projektierung).

Im Verkehrsnetz können beliebig viele dezentrale Gatewayrechner und Informationsserver vorgehalten werden und das Verkehrsnetz ist bei Bedarf erweiterbar.

Die Anforderungen an die Funktionalität des Verkehrsnetzes sind durch die Einführung des dezentralen optimierten Verfahrens minimal (z.B. ist kein location update im Festnetz nötig).

Falls zwischen Gatewayrechnern und Bahndiensten zusätzliche Informationsserver eingeschaltet werden, besteht ein weiterer Vorteil in der durch die Kaskadierung minimierten Informatiönsübertragung. Bei Änderungsmeldungen muss in diesem Fall nicht mehr jeder Bahndienst direkt mittels Updateprotokoll informiert werden, sondern die Korrektur wird zentral im In-Zormationsserver vorgehalten und kann von den Bahndiensten bei Bedarf abgefragt werden. Damit können die dynamischen Informationen zur Gatewayrechnerauswahl, bei Bedarf nach Selektionskriterien geordnet, mit minimalem Kommunikationsaufwand zentral bereitgestellt werden. Redundante Informationen in den ortsfesten Instanzen werden vermieden.

Das vorliegende Kommunikationsverfahren erlaubt den Betrieb von Mischstrukturen. Informationsserver können für bestimmte Bahndienste oder bestimmte mobile Instanzen (z, B, Zuggattungen) Auskunftsfunktionen bereitstellen und damit den Updatekommunikationsaufwand minimieren, z. B. bei seltener Kommunikation mit mobilen Instanzen, Parallel dazu kann für weitere ortsfeste Bahndienste oder nach definierten Selektionskrite rien ein direktes Updateverfahren mittels Gatewayrechner realisiert werden, z.B. bei häufiger Kommunikation mit mobilen Instanzen. Damit sind die Strukturen und die Kommunikation an die Erfordernisse des Verkehrsbetriebs anpassbar.

Die Erfindung soll nachstehend an Hand von zumindest teilweise in den Figuren dargestellten Ausführungsbeispielen näher beschrieben werden. Es zeigen:
- Figur 1: eine Variante einer optimierten Funkkommunikation durch dezentrales Linkabbild
- Figur 2: eine Variante einer optimierten Funkkommunikation durch zentrales Linkabbild
- Figur 3: eine Variante einer optimierten Funkkommunikation durch zentrales und dezentrales Linkabbild.

Das Kommunikationsverfahren unterscheidet am Beispiel BahnDienst zwischen drei Komponenten:
a) mobile Instanzen (z. B. Züge),
b) ortsfeste Gatewayrechner,
c) ortsfeste Instanzen (zentrale Bahndienste, dezentrale Steuerungseinrichtungen oder Informationsserver).

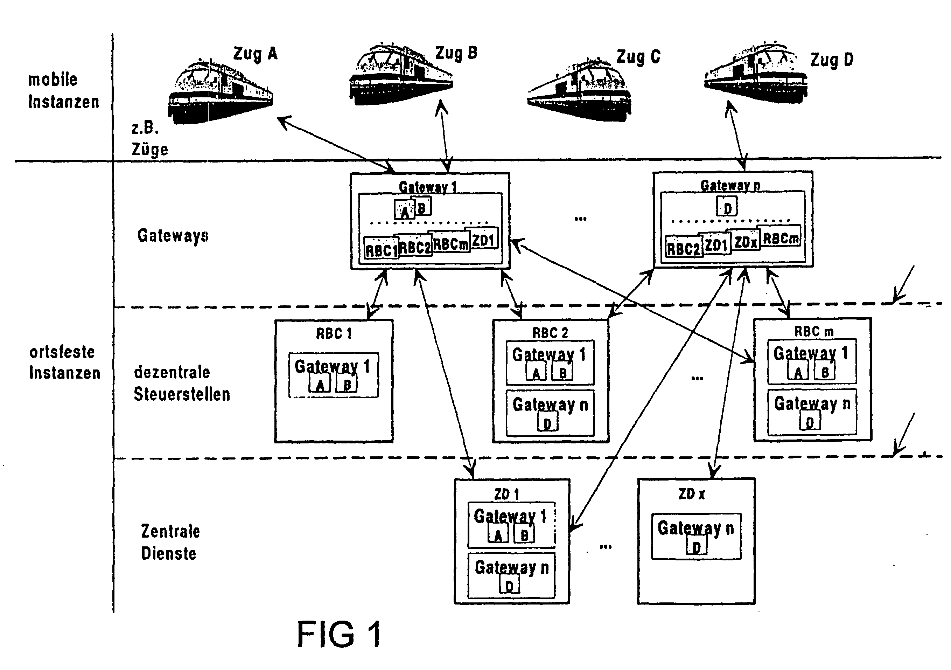

Wie in Figur 1 dargestellt, wird für mobile Instanzen, die mit einem Gatewayrechner kommunizieren, im Gatewayrechner eine Stellvertreterinstanz eingerichtet, für ortsfeste Instanzen, die mit dem Gatewayrechner kommunizieren, wird im Gatewayrechner ebenfalls eine Stellvertreterinstanz eingerichtet und in jeder ortsfesten Instanz, die in einem Gatewayrechner eine Stellvertreterinstanz besitzt, werden Informationen über Stellvertreter mobiler Instanzen dieses Gatewayrechners eingerichtet.

Ein Updateverfahren zwischen den Stellvertreterinstanzen im Gatewayrechner und den ortsfesten Instanzen aktualisiert die Stellvertreterinformationen im Gatewayrechner und in den ortsfesten Instanzen bei Veränderungen (z.B. Einrichten einer neuen Stellvertreterinstanz bei Aufnahme der Funkkommunikation zu einem weiteren Zug). Das Updateverfahren ist optimiert hinsichtlich der Anforderungen an Laufzeit, Durchsatz u.ä..

In den ortsfesten Instanzen liegen aufgrund des Updateverfahrens immer aktuelle Informationen vor, welche Gatewayrecher mit welchen mobilen Instanzen kommunizieren. Zentrale Dienste und dezentrale Steuerungseinrichtungen können aufgrund der vorliegenden Informationen entscheiden, ob der mobile Instanzen gegenwärtig in einem der bekannten Gatewayrechner registriert ist und wenn ja, in welchem Gatewayrechner. Anhand dieser Entscheidung kann die Auswahl für den korrekten Gatewayrechner, welcher bereits mit dem Zug kommuniziert, erfolgen. Liegt über den mobilen Instanzen keine Stellvertreterinformation vor, kann eine eigene Auswahl des Gatewayrechners erfolgen (z.B. nach dem Kriterium des optimalen Kommunikationsweges).

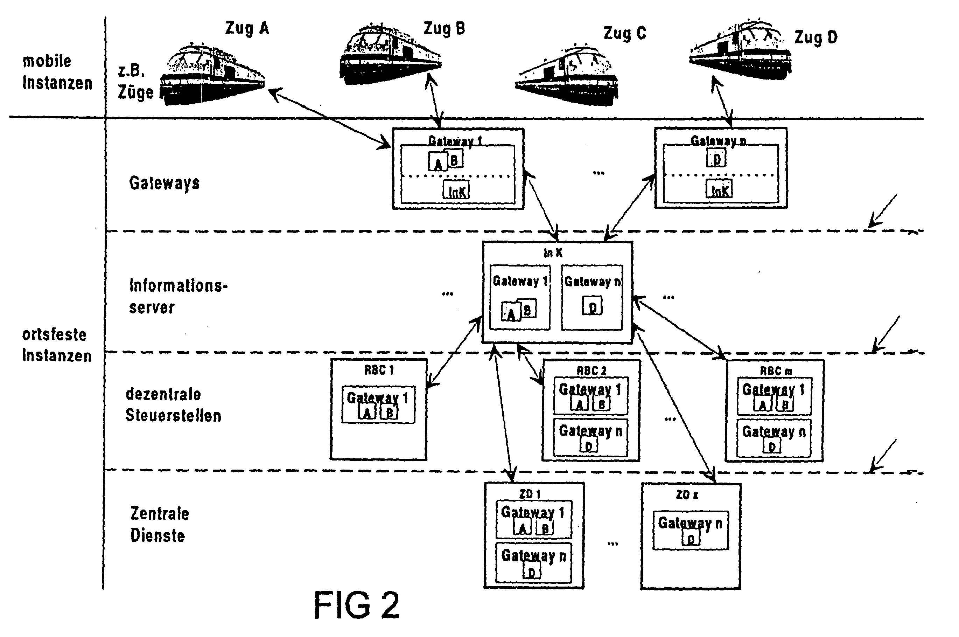

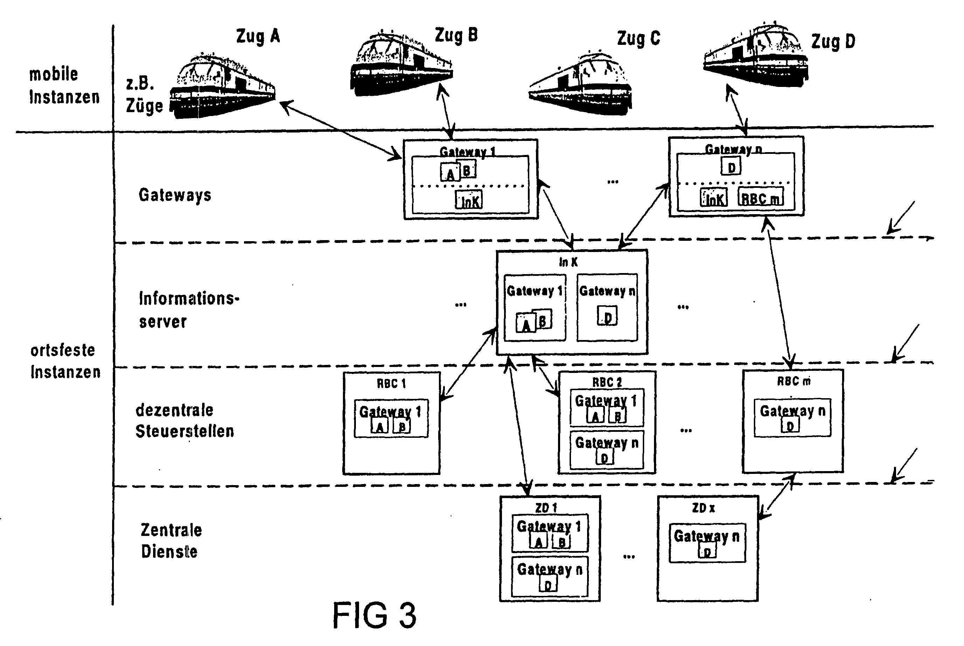

Ein weiterer Optimierungsschritt besteht in der Einschaltung von Informationsservern zur Kaskadierung der Updateinformationen, wie in Figur 2 dargestellt. In diesem Fall werden die Informationen über erreichbare mobile Instanzen und zugehörige Gatewayrechner nicht in den zentralen Diensten und dezentralen Steuerstellen vorgehalten, sondern in einem zwischengeschalteten ortsfesten Informationsserver. Zwischen Informationsserver und Gatewayrechner arbeitet ein Updateverfahren. Im Informationsserver liegen dadurch komprimierte Informationen über erreichbare mobile Instanzen verschiedener Gatewayrecher vor. Diese Informationen können von anderen ortsfesten Instanzen, die mobile Kommunikationsteilnehmer erreichen wollen, abgerufen werden (Auskunftsfunktion). Falls gewünscht, kann der Informationsserver die Initiative für die Kommunikation mit ortsfesten Instanzen übernehmen und Updateinformationen filtern und verteilen (Änderungsdienst). Auch Mischvarianten mit und ohne Zwischenschaltung von Informationsservern sind möglich, wie in Figur 3 dargestellt. Die jeweilige Realisierung hängt von den Kommunikationsanforderungen der Anwendungen ab (z.B. Häufigkeit der Kommunikation, Zeitanforderungen).

Die Anzahl der mobilen und ortsfesten Stellvertreterinstanzen je Gatewayrechner ist beliebig. Ebenso können beliebig viele Gatewayrechner und Informationsserver in einem Bahnnetz installiert werden. Das Verfahren zur Auswahl der Gatewayrechner ist für zentrale Dienste und dezentrale Steuerungseinrichtungen gleich.

Nachfolgend sollen dynamische Funktionen des Kommunikationssystems beschrieben werden.

### I. Signalisierung

### IA. Kommunikationsaufbau von mobiler Seite

Zum Aufbau der Kommunikation wird durch das Netzwerk (nach festgelegten Kriterien) ein dezentraler Gatewayrechner ausgewählt. Im Gatewayrechner wird eine Stellvertreterinstanz des mobilen Instanzens eingerichtet- Gesteuert durch das Updateprotokoll werden daraufhin Updateinformation über die Stellvertreterinstanz an alle angemeldeten ortsfesten Instanzen verteilt. In diesen Instanzen liegt damit die Information über die Erreichbarkeit der mobilen Instanz und über den zugehörigen dezentralen Gatewayrechner vor.

### IB. Kommunikationsabbau von mobiler Seite

Beendet eine mobile Instanz die Kommunikation mit dem ersten Gatwayrechner, wird die Stellvertreterinstanz in dem ersten Gatewayrechner gelöscht. Das Updateverfahren aktualisiert bei allen gemeldeten ortsfesten Instanzen die Stellvertreterinformation.

### IC. Kommunikationsaufbau von ortsfester Seite

Jede ortsfeste Instanz kann zu einem Gatewayrechner Verbindung aufnehmen. Falls nicht jede ortsfeste Instanz mit jedem Gatewayrechner kommunizieren muß, können in der ortsfesten Instanz Beschränkungen bestehen, mit welchen Gatewayrechnern Verbindung aufgenommen werden soll. Weiterhin können auch Beschränkungen vorliegen über die Auswahl und den Umfang der Updateinformationen, die zwischen einem Gatewayrechner und der ortsfesten Instanz ausgetauscht werden sollen (beispielsweise können selektiv nur Updateinformationen über Hochgeschwindigkeitszüge an die ortsfeste Instanz übertragen werden).

Initiiert eine ortsfeste Instanz die Kommunikation zu einem Gatewayrechner, wird in diesem Gatewayrechner eine Stellvertreterinstanz eingerichtet. Weiterhin kann ein Profil über die gewünschten Updatenachrichten eingerichtet werden. Vom Gatewayrechner wird daraufhin mittels Updateprotokoll das aktuelle Abbild der mobilen Stellvertreterinstanzen (ggf. selektiert nach Kriterien des Updateprofils) zur ortsfesten Instanz übertragen. In der ortsfesten Instanz liegen damit die Informationen über die erreichbaren mobilen Instanzen des Gatewayrechners vor. Auf Grund der vorliegenden Signalisiezungsinfoxmationen kann ein ortsfester Bahndienst eine Datenverbindung zur mobilen Instanz über den aktuell von der mobilen Instanz genutzten Gatewayrechner aufbauen.

Die ortsfeste Instanz, die Verbindung zu einem Gatewayrechner aufnimmt, kann auch ein Informationsserver sein. In diesem Fall wird das Verzeichnis der Stellvertreter mobiler Instanzen des Gatewayrechners im Informationsserver eingerichtet.

Zentrale Dienste und dezentrale Steueistellen können entweder Direkt mit einem Gatewayrechner kommunizieren oder Informationen zu mobilen Instanzen in Gatewayrechnern über Informationsserver erhalten. Im Falle der Nutzung eines Informationsservers wird die Kommunikation zwischen Informationsserver und Gatewayrechner in gleicher Art und Weise wie zwischen Bahndienst und Gatewayrechner im Falle ohne Informationsserver abgewickelt. Die ortsfesten Bahndienste sind in diesem Fall nicht in das Updateverfahren zwischen Informationsserver und Gatewayrechner einbezogen. Der Verbindungsaufbau von der ortsfesten zur mobilen Instanz unterteilt sich bei Verwendung des Informationsservers in zwei Schritte.

Erster Schritt: Übermittlung von Signalisierungsinformationen zwischen ortsfester Instanz und Informationsserver. Diese Kommunikation dient der Zielsuche (Auskunft über anzuwählenden Gatewayrechner). Die Kommunikation zwischen ortsfester Instanz und Informationsserver kann sowohl durch den Bahndienst initiiert werden (Anruf Auskunft), als auch auf Initiative des Informationsservers erfolgen (Änderungsdienst). Nach erfolgter Signalisierung wird die Kommunikation zwischen ortsfestem Bahndienst und Informationsserver beendet.

Zweiter Schritt: Aufbau der Datenverbindung zwischen ortsfestem Bahndienst und mobiler Instanz über den ermittelten Gatewayrechner.

### ID. Kommunikationsabbau von ortsfester Seite

Beendet eine ortsfeste Instanz die Kommunikation mit einem Gatewayrechner, wird das Updateverfahren zu dieser ortsfesten Instanz beendet. Der Stellvertreter der ortsfesten Instanz im Gatewayrechner wird gelöscht. Informationen über Änderungen von Stellvertreterinstanzen im Gatewayrechner werden zukünftig nicht mehr zur ortsfesten Instanz übertragen.

### II. Datenübertragung

Es sind drei verschiedene Datenarten zu übertragen:
IIA. Daten zwischen mobilen Instanzen und dezentralen Steuerungseinrichtungen
IIB. Daten zwischen mobilen Instanzen und zentralen Diensten
IIC. Signalisierungsinformationen zwischen Gatewayrechnern, Informationsservern und ortsfesten Instanzen (mittels Updateverfahren).

Der Applikationsdatenverkehr von IIA und IIB läuft immer direkt über ein Gatewayrechner ohne Zwischenschaltung eines Informationsservers. An die Übertragung der verschiedenen Arten von Daten können verschiedene Anforderungen gestellt werden. Beispielsweise können an die Übertragung von Daten zwischen mobilen Instanzen und dezentralen Steuerungseinrichtungen hohe Zeit- und Verfügbarkeitsanforderungen gestellt werden. Die Datenart IIB (z. B. Diagnose) kann dagegen geringere Zeitanforderungen aufweisen und den Charakter von Massendaten besitzen. Derartige Daten können ggf. im Gatewayrechner selektiert, verdichtet und vorverarbeitet werden. Möglich ist ebenfalls eine Übertragung in Abhängigkeit von definierten Grenzwertkriterien oder bei Bestehen einer Funkverbindung für andere Applikationen und verfügbaren Ressourcen. Durch intelligente Vorverarbeitung und Pufferung nicht zeitkritischer Daten kann der Zeitpunkt der Entstehung der Daten von dem Zeitpunkt der Übertragung entkoppelt werden. Damit entfällt die Notwendigkeit der direkten Durchschaltung von Datenkanälen und die Lastverteilung im Netz wird günstiger. Die Daten des Updateverfahrens IIC sind keine Nutzerdaten, sondern Hilfsinformationen zur Übertragung von Änderungsmeldungen zwischen einem Gatewayrechner und den verbundenen ortsfesten Instanzen (zentrale Dienste, dezentrale Steuerstellen oder Informationsserver). Falls ein Informationsserver genutzt wird, erfolgt die Übertragung der Updatedaten zwischen Infor-mationsserver und Gatewayrechner. Ortsfeste Bahndienste kön-nen durch Zugriff auf die aktuellen Verzeichnissen im Informationsserver den zuständigen Gatewayrechner einer mobilen Instanz ermitteln und über diesen Gatewayrechner anschließend zur mobilen Instanz kommunizieren. Andernfalls werden die Updatedaten direkt zwischen Gatewayrechner und ortsfestem Bahndienst übertragen.

Die Erfindung ist nicht beschränkt auf die hier dargestellten Ausführungsbeispiele. Vielmehr ist es möglich, durch Kombination und Modifikation der Mittel und Merkmale weitere Ausführungsvarianten zu realisieren, ohne den Rahmen der Erfindung zu verlassen.

## Patentansprüche

1. Optimiertes Kommunikationsverfahren für funkgestützte Verkehrsdienste mit einem Verkehrsnetz zur funktechnischen Überinittlung von Daten zwischen mobilen Instanzen (Züge A bis D) und zentrale Dienste und dezentrale Steuerstellen aufweisenden ortsfesten Instanzen (RBC1 bis RBCm, ZD1 bis ZDx), wobei in das Verkehrsnetz mehrere dezentrale ortsfeste Gatewayrechner (Gateway 1 bis Gateway n) eingeführt werden und wobei die Kommunikation zwischen den mobilen Instanzen (Züge A bis D) und den ortsfesten Instanzen (RBC1 bis RBCm, ZD1 bis ZDx) über die Gatewayrechner (Gateway 1 bis Gateway n) realisiert wird, derart, dass
für die mobilen Instanzen (Züge A bis D), die mit den Gatewayrechnern (Gateway 1 bis Gateway n) kommunizieren, im Gatewayrechner (Gateway 1 bis Gateway n) und in den ortsfesten Instanzen (RBC1 bis RBCm, ZD1 bis ZDx) je eine Stellvertreterinstanz und
für die ortsfesten Instanzen (RBC1 bis RBCm, ZD1 bis ZDx), die mit den Gatewaytechnern (Gateway 1 bis Gateway n) kommunizieren, im Gatewayrechner (Gateway 1 bis Gateway n) Stellvertreterinstanzen eingerichtet werden, wobei für mehrere ortsfeste Instanzen (RBC1 bis RBCm, ZD1 bis ZDx) in einem Gatewayrechner (Gateway 1 oder ... oder Gateway n) Stellvertreterinstanzen eingerichtet werden können und
über ein Updateverfahren zwischen den Stellvertreterinstanzen im Gatewayrechner (Gateway 1 bis Gateway n) und den ortsfesten Instanzen (RBC1 bis RBCm, ZD1 bis ZDx) die Stellvertreterinformation im Gatewayrechner (Gateway 1 bis Gateway n) und in den ortsfesten Instanzen (RBC1 bis RBCm, ZD1 bis ZDx) aktualisiert werden, so dass die ortsfesten Instanzen (RBC1 bis RBCm, ZD1 bis ZDx) jederzeit Kenntnis darüber erhalten, welche Gatewayrechner (Gateway 1 bis Gateway n) mit welchen mobilen Instanzen (Züge A bis D) kommunizieren, wobei nur diejenigen ortsfesten Instanzen (RBC1 bis RBCm, ZD1 bis ZDx) informiert werden, die auch im Gatewayrechner (Gateway 1 bis Gateway n) registriert sind, wodurch sie in die Lage versetzt werden, sich über den jeweiligen Gatewayrechner (Gateway 1 bis Gateway n) auf die bestehende Verbindung zu der jeweiligen mobilen Instanz (Züge A bis D) aufzuschalten und diese Verbindung mit zu benutzen.

2. Optimiertes Kommunikationsverfahren nach Anspruch 1,
**dadurch gekennzeichnet,**
**dass** in das Verkehrsnetz zusätzlich ortsfeste Instanzen bildende Informationsserver (InK) eingeführt werden, in welchen die Stellvertreterinstanzen (A, B, D) für die mobilen Instanzen (Züge A, B, D) mehrerer Gatewayrechner (Gateway 1, Gateway n) abgelegt werden und die mittels eines zwischen den Gatewayrechnern (Gateway 1, Gateway n) und den Informationsservern (InK) ablaufenden Updateverfahrens aktuell gehalten werden, so dass diese Informationsserver (InK) auf Anforderung ortsfester Instanzen Informationen über erreichbare mobile Instanzen zugehöriger Gatewayrechner (Gateway 1, Gateway n) bereitstellen können.

3. Optimiertes Kommunikationsverfahren nach Anspruch 1 und 2,
**dadurch gekennzeichnet,**
**dass** Mischstrukturen vorgesehen werden, bei denen für eine erste Gruppe kommunizierender Instanzen die Update-Informationen der Stellvertreterinstanzen bis zu den ortsfesten Instanzen der ersten Gruppe übermittelt werden und für eine zweite Gruppe kommunizierender Instanzen die Update-Informationen an Informationsserver übermittelt werden, so dass die ortsfesten Instanzen der zweiten Gruppe die Auskunftsdienste der Informationsserver benutzen können.

## Claims

1. Optimized communication method for radio-assisted traffic services having a traffic network for radio transmission of data between mobile objects (trains A to D) and central services and fixed-position objects (RBC1 to RBCm, ZD1 to ZDx), which have decentralized control centres, a plurality of decentralized fixed-position gateway computers (gateway 1 to gateway n) being introduced into the traffic network, and the communication between the mobile objects (trains A to D) and the fixed-position objects (RBC1 to RBCm, ZD1 to ZDx) is implemented via the gateway computers (gateway 1 to gateway n) in such a manner that
- for the mobile objects (trains A to D) which communicate with the gateway computers (gateway 1 to gateway n), one substitute object is in each case set up in the gateway computer (gateway 1 to gateway n) and in the fixed-position objects (RBC1 to RBCm, ZD1 to ZDx), and
- for the fixed-position objects (RBC1 to RBCm, ZD1 to ZDx) which communicate with the gateway computers (gateway 1 to gateway n), substitute objects are set up in the gateway computer (gateway 1 to gateway n), in which case substitute objects can be set up for a plurality of fixed-position objects (RBC1 to RBCm, ZD1 to ZDx) in one gateway computer (gateway 1 or ... or gateway n), and
- using an update process, the substitute information in the gateway computer (gateway 1 to gateway n) and in the fixed-position objects (RBC1 to RBCm, ZD1 to ZDx) is updated between the substitute objects in the gateway computer (gateway 1 to gateway n) and the fixed-position objects (RBC1 to RBCn, 2D1 to 2Dx), so that the fixed-position objects (RBC1 to RBCm, ZD1 to ZDx), receive information at any time relating to which gateway computers (gateway 1 to gateway n) are communicating with which mobile objects (trains A to D), the only fixed-position objects (RBC1 to RBCm, ZD1 to ZDx) which are informed being those which are also registered in the gateway computer (gateway 1 to gateway n), by which means they are able to connect to the existing link to the respective mobile object (trains A to D) via the respective gateway computer (gateway 1 to gateway n) and to also use this link.

2. Optimized communication method according to Claim 1,
**characterized**
**in that** information servers (Ink) which form fixed-position objects are additionally introduced into the traffic network, the representative objects (A, B, D) for the mobile objects (trains A, B, D) of a plurality of gateway computers (gateway 1, gateway n) are stored in these information servers (Ink) and are kept up-to-date by means of an update method which is carried out between the gateway computers (gateway 1, gateway n) and the information servers (Ink), so that these information servers (Ink) can provide information about accessible gateway computers (gateway 1, gateway n) which are associated with mobile objects on request from fixed-position objects.

3. Optimized communication method according to Claims 1 and 2,
**characterized**
**in that** mixed structures are provided, in which the update information for the representative objects for a first group of communicating objects is transmitted as far as the fixed-position objects in the first group, and the update information for a second group of communicating objects is transmitted to information servers, so that the fixed-position objects in the second group can use the information services of the information servers.

## Revendications

1. Procédé de communication optimisé pour des services de circulation assistés par radio avec un réseau de communications en vue de la transmission par radio de données entre des instances mobiles (trains A à D) et des instances fixes (RBC1 à RBCm, ZD1 à ZDx) comportant des services centraux et des postes de commande décentralisés, plusieurs ordinateurs passerelles fixes décentralisés (Gateway 1 à Gateway n) étant introduits dans le réseau de communications et la communication entre les instances mobiles (trains A à D) et les instances fixes (RBC1 à RBCm, ZD1 à ZDx) étant réalisée par l'intermédiaire des ordinateurs passerelles (Gateway 1 à Gateway n) de telle sorte que
- pour les instances mobiles (trains A à D) qui communiquent avec les ordinateurs passerelles (Gateway 1 à Gateway n), on peut installer à chaque fois une instance représentante dans l'ordinateur passerelle (Gateway 1 à Gateway n) et dans les instances fixes (RBC1 à RBCm, ZD1 à ZDx), et
- pour les instances fixes (RBC1 à RBCm, ZD1 à ZDx) qui communiquent avec les ordinateurs passerelles (Gateway 1 à Gateway n), on peut installer des instances représentantes dans l'ordinateur passerelle (Gateway 1 à Gateway n), des instances représentantes pouvant être installées dans un ordinateur passerelle (Gateway 1 ou ... ou Gateway n) pour plusieurs instances fixes (RBC1 à RBCm, ZD1 à ZDx), et
- par l'intermédiaire d'un procédé de mise à jour entre les instances représentantes dans l'ordinateur passerelle (Gateway 1 à Gateway n) et dans les instances fixes (RBC1 à RBCm, ZD1 à ZDx), on met à jour l'information de représentant dans l'ordinateur passerelle (Gateway 1 à Gateway n) et dans les instances fixes (RBC1 à RBCm, ZD1 à ZDx) de telle sorte que les instances fixes (RBC1 à RBCm, ZD1 à ZDx) savent à tout moment quels ordinateurs passerelles (Gateway 1 à Gateway n) communiquent avec quelles instances mobiles (trains A à D), seules les instances fixes (RBC1 à RBCm, ZD1 à ZDx) qui sont aussi inscrites dans l'ordinateur passerelle (Gateway 1 à Gateway n) étant informées, à la suite de quoi elles sont capables de se connecter par l'intermédiaire de l'ordinateur passerelle respectif (Gateway 1 à Gateway n) sur la liaison existante vers l'instance mobile respective (trains A à D) et d'utiliser en même temps cette liaison.

2. Procédé de communication optimisé selon la revendication 1, **caractérisé par le fait qu'**on introduit en plus dans le réseau de communications des serveurs d'informations (InK) constituant des instances fixes, dans lesquels sont enregistrées les instances représentantes (A, B, D) pour les instances mobiles (trains A, B, D) de plusieurs ordinateurs passerelles (Gateway 1, Gateway n) et qui sont maintenus à jour au moyen d'un procédé de mise à jour s'exécutant entre les ordinateurs passerelles (Gateway 1, Gateway n) et les serveurs d'informations (InK) de telle sorte que ces serveurs d'informations (InK) peuvent fournir à la demande d'instances fixes des informations sur des instances mobiles joignables d'ordinateurs passerelles associés (Gateway 1, Gateway n).

3. Procédé de communication optimisé selon les revendications 1 et 2, **caractérisé par le fait qu'**on prévoit des structures mixtes telles que, pour un premier groupe d'instances communicantes, les informations de mise à jour des instances représentantes sont transmises aux instances fixes du premier groupe et, pour un deuxième groupe d'instances communicantes, les informations de mise à jour sont transmises à des serveurs d'informations de telle sorte que les instances fixes du deuxième groupe peuvent utiliser les services de renseignement des serveurs d'informations.
